(19) Europäisches Patentamt
European Patent Office
Office européen des brevets

(11) EP 0 678 553 B1

(12) **EUROPÄISCHE PATENTSCHRIFT**

(45) Veröffentlichungstag und Bekanntmachung des Hinweises auf die Patenterteilung:
**24.11.1999 Patentblatt 1999/47**

(21) Anmeldenummer: **95105399.0**

(22) Anmeldetag: **10.04.1995**

(51) Int Cl.[6]: **C08L 55/02**, C08L 51/04, C08F 279/04, C08F 279/02, C08F 285/00
// (C08F279/02, 212:10)

(54) **Thermoplastische Formmassen vom ABS-Typ**

Thermoplastic moulding compositions of the ABS-type

Masses à mouler thermoplastiques du type AB

(84) Benannte Vertragsstaaten:
**BE DE ES FR GB NL**

(30) Priorität: **22.04.1994 DE 4414123**

(43) Veröffentlichungstag der Anmeldung:
**25.10.1995 Patentblatt 1995/43**

(73) Patentinhaber: **BAYER AG**
**51368 Leverkusen (DE)**

(72) Erfinder:
- **Schmidt, Adolf, Dr.**
  **D-51061 Köln (DE)**
- **Eichenauer, Herbert, Dr.**
  **D-41539 Dormagen (DE)**
- **Jansen, Ulrich, Dr.**
  **D-41541 Dormagen (DE)**

(56) Entgegenhaltungen:
**EP-A- 0 253 236**

- **DATABASE WPI Week 7414 Derwent Publications Ltd., London, GB; AN 74-25603V & JP-A-48 031 243 (MITSUBISHI RAYON CO LTD) , 24.April 1973**

EP 0 678 553 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Formmassen vom ABS-Typ mit gegenüber bekannten ABS-Formmassen verbesserten Eigenschaften, insbesondere einer Kombination aus sehr hoher Zähigkeit und sehr hohem Oberflächenglanz.

ABS-Formmassen sind Zweiphasenkunststoffe aus

1. einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrixharz bezeichnet, bildet die äußere Phase;
und

2. mindestens einem Pfropfpolymerisat, welches hergestellt worden ist durch Pfropfreaktion eines oder mehrerer der unter 1. genannten Monomeren auf ein Butadienhomo- oder -copolymerisat ("Pfropfgrundlage"). Dieses Pfropfpolymerisat ("Elastomerphase" oder "Pfropfkautschuk") bildet die disperse Phase im Matrixharz.

Eine Schlüsseleigenschaft von ABS-Formmassen ist ihre gute Schlagzähigkeit, weshalb diese Materialien vorzugsweise in Anwendungsbereichen mit hoher mechanischer Beanspruchung eingesetzt werden.

Es ist bekannt, daß zur Erzielung hoher Zähigkeitswerte bei der Herstellung von ABS-Formmassen Kautschukteilchen mit möglichst großem Durchmesser eingesetzt werden müssen.

Problematisch wird jedoch die Verwendung derartiger zäher Materialien, wenn gleichzeitig ein hoher Oberflächenglanz der aus den ABS-Polymerisaten hergestellten Formteile gefordert wird (vgl. F.Lednicky u. Z.Pelzbauer, Angew. Makromol. Chem. 141 (1986), 151).
Zwar ist die Verwendung von Bimodalsystemen (Kombinationen von Pfropfkautschuken auf Basis grob- und feinteiliger Kautschukteilchen) für solche Zwecke beschrieben worden (vgl. z.B. DE-OS 24 20 357 und DE-OS 24 20 358 sowie die dort zitierte Literatur), jedoch werden mit diesen Systemen keine Hochzäh-Produkte erhalten und durch den zur Sicherung der Zähigkeit noch immer notwendigerweise enthaltenen Anteil an grobteiligem Kautschuk in der dispersen Phase wird der Oberflächenglanz negativ beeinflußt, wodurch die Erzeugung hochglänzender Formteile nicht gelingt.

Es wurde nun gefunden, daß auch unter alleiniger Verwendung relativ kleiner speziell aufgebauter Kautschukteilchen bei Einhaltung definierter Mengenverhältnisse der Einsatzkomponenten und durch Anwendung spezieller Reaktionsbedingungen bei der Pfropfkautschukherstellung ABS-Formmassen erhalten werden, die gleichzeitig hohe Werte für die Schlagzähigkeit und einen hohen Oberflächenglanz aufweisen.

Gegenstand der Erfindung sind thermoplastische Formmassen vom ABS-Typ, erhältlich durch

A) Herstellen eines Kautschuklatex mit einem mittleren Teilchendurchmesser $d_{50}$ von 30 bis 160 nm, vorzugsweise von 50 bis 150 nm und besonders bevorzugt von 80 bis 140 nm und einem Gelgehalt von 75 bis 100 Gew.-%, vorzugsweise 80 bis 95 Gew -% und besonders bevorzugt 85 bis 95 Gew.-% durch Emulsionspolymerisation von Butadien und gegebenenfalls bis zu 50 Gew.-% (bezogen auf Gesamtmonomermenge in Stufe A) eines Comonomeren,

B) Emulsions-Polymerisation einer solchen Menge Butadien und gegebenenfalls bis zu 50 Gew.-% (bezogen auf Gesamtmonomermenge in Stufe B) eines Comonomeren in Gegenwart des nach Stufe A erhaltenen Kautschuklatex, daß ein Kautschuklatex (B) mit einem mittleren Teilchendurchmesser $d_{50}$ = 220 bis 330 nm, vorzugsweise 230 bis 320 nm und besonders bevorzugt 250 bis 310 nm und einem Gelgehalt von 25 bis 70 Gew-%, vorzugsweise 30 bis 65 Gew.-% und besonders bevorzugt 35 bis 60 Gew.-% entsteht,

C) Emulsions-Polymerisation von 40 bis 95 Gew.-Teilen, vorzugsweise 50 bis 90 Gew.-Teilen und besonders bevorzugt 55 bis 80 Gew.-Teilen, eines Gemisches aus Styrol und Acrylnitril, das gegebenenfalls bis zu 50 Gew.-% (bezogen auf Gesamtmenge der in Stufe C eingesetzten Monomeren) eines oder mehrerer Comonomerer enthält in Gegenwart von 5 bis 60 Gew.-Teilen, vorzugsweise 10 bis 50 Gew.-Teilen und besonders bevorzugt 20 bis 45 Gew.-Teilen (jeweils bezogen auf Feststoff) des nach Stufe B erhaltenen Kautschuklatex durch Monomerenzulauf in der Weise, daß innerhalb der ersten Hälfte der Monomerenzulaufzeit 55 bis 90 Gew.-%, vorzugsweise 60 bis 80 Gew.-% und besonders bevorzugt 65 bis 75 Gew.-% der Monomeren zudosiert werden und

D) Mischen des nach Stufe C erhaltenen Polymerisats, vorzugsweise nach vorheriger Überführung in Pulverform, mit mindestens einem thermoplastischen Vinylharz, vorzugsweise einem Styrol/Acrylnitril-Copolymer.

Der erste Kautschuklatex (Stufe A) kann durch Emulsionspolymerisation von Butadien hergestellt werden. Diese Polymerisation ist bekannt und z.B. in Houben-Weyl, Methoden der Organischen Chemie, Makromolekulare

Stoffe, Teil 1, S. 674 (1961), Thieme Verlag Stuttgart, beschrieben. Als Comonomere können bis zu 50 Gew.-% (bezogen auf die gesamte in Stufe A eingesetzte Monomermenge) eines oder mehrerer mit Butadien copolymerisierbarer Monomerer eingesetzt werden. Beispiele für solche Monomere sind Isopren, Chloropren, Acrylnitril, Styrol, α-Methylstyrol, $C_1$-$C_4$-Alkylstyrole, $C_1$-$C_8$-Alkylacrylate, $C_1$-$C_8$-Alkylmethacrylate, Alkylenglykolacrylate, Alkylenglykoldimethacrylate, Divinylbenzol; vorzugsweise wird Butadien allein eingesetzt.

Der in Stufe A hergestellte Kautschuklatex besitzt einen mittleren Teilchendurchmesser $d_{50}$ (bestimmt durch Ultrazentrifugenmessung, vgl. W. Scholtan, H. Lange: Kolloid-Z. u. Z. Polymere 250, S. 782 bis 796 (1972)) von 30 bis 160 nm, vorzugsweise 50 bis 150 nm und besonders bevorzugt 80 bis 140 nm, der Gelgehalt (bestimmt nach der Drahtkäfigmethode in Toluol, vgl. Houben-Weyl, Methoden der Organischen Chemie, Makromolekulare Stoffe, Teil 1, S. 307 (1961), Thieme Verlag Stuttgart) beträgt 75 bis 100 Gew.-%, vorzugsweise 80 bis 95 Gew.-% und besonders bevorzugt 85 bis 95 Gew.-%.

Der Kautschuklatex in Stufe B kann durch Polymerisation von Butadien in Gegenwart des nach Stufe A erhaltenen Latex hergestellt werden. Mit dieser sogenannten Saatlatexpolymerisation (vgl. Houben-Weyl, Methoden der Organischen Chemie, Makromolekulare Stoffe, Teil 1, S. 339 (1961), Thieme Verlag Stuttgart) können gezielt gröberteilige Latices erhalten werden.

Dazu wird soviel Butadien, und gegebenenfalls bis zu 50 Gew.-% (bezogen auf die gesamte in Stufe B eingesetzte Monomermenge) eines oder mehrerer Comonomerer (z.B. die für Stufe A als Beispiele genannten Monomeren) in Gegenwart des nach Stufe erhaltenen Kautschuklatex polymerisiert, bis ein Latex mit einem mittleren Teilchendurchmesser $d_{50}$ von 220 bis 330 nm, vorzugsweise 230 bis 320 nm und besonders bevorzugt 250 bis 310 nm und einem Gelgehalt von 25 bis 70 Gew.-%, vorzugsweise 30 bis 65 Gew.-% und besonders bevorzugt 35 bis 60 Gew.-% gebildet ist.

Vorzugsweise besitzt der Kautschuklatex B eine enge Teilchengrößenverteilung, d.h. eine Breite der Teilchengrößenverteilung (gemessen als $d_{90}$-$d_{10}$ aus der integralen Teilchengrößenverteilung) $\leq$ 120 nm, vorzugsweise $\leq$ 100 nm besonders bevorzugt $\leq$ 80 nm und ganz besonders bevorzugt $\leq$ 60 nm.

Die Gelgehalte in den Latices der Stufen A und B können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes).

Als Emulgatoren können die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von $C_{10}$-$C_{18}$-Fettsäuren, disproportionierte Abietinsäure) eingesetzt. Besonders bevorzugt sind solche Emulgatoren (insbesondere für die Herstellung des Kautschuklatex in Stufe B), die bei der Saatpolymerisation nicht zur Teilchenneubildung führen, z.B. Verbindungen der Formel (I).

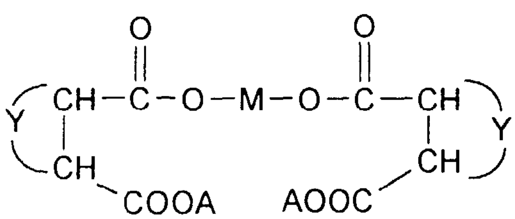

(I)

mit M =

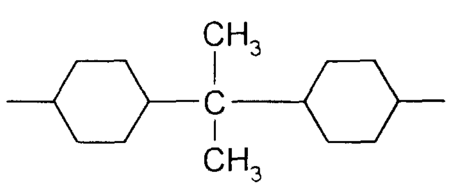 , 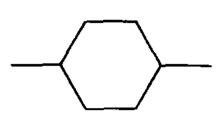 ,

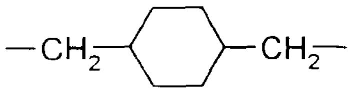 , 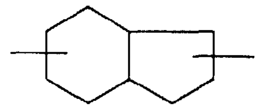 ,

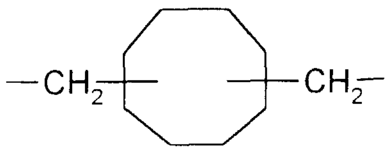 , 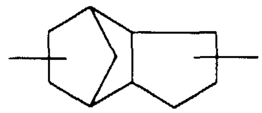 ,

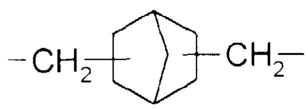 , 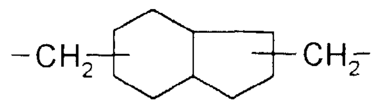 ,

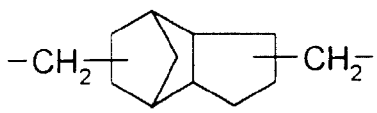 , 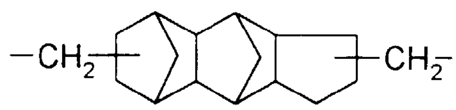 ,

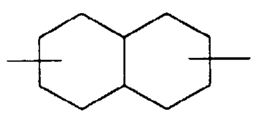 , 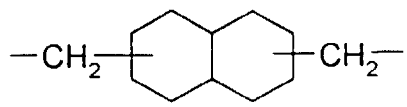 ,

Y =

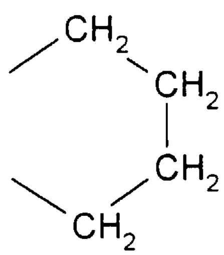 , 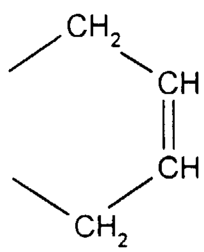 ,

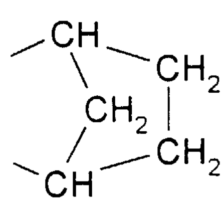 , 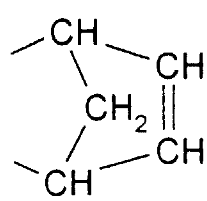 .

A = Alkalimetall, Ammonium.

Derartige Emulgatoren sind bekannt (vgl. z.B. DE-OS 39 19 548 und DE-OS 39 25 634).

Die Pfropfpolymerisation in Stufe C kann so durchgeführt werden, daß das Monomerengemisch kontinuierlich zu dem nach Stufe B erhaltenen Kautschuklatex gegeben und polymerisiert wird.

Dabei muß ein spezielles Monomer : Kautschuk-Verhältnis und eine definierte Vorgehensweise bei der Monomerzugabe zum Kautschuklatex eingehalten werden.

Zur Erzeugung der erfindungsgemäßen Produkte werden in Stufe C 40 bis 95 Gew.-Teile, vorzugsweise 50 bis 90 Gew.-Teile, und besonders bevorzugt 55 bis 80 Gew.-Teile eines Gemisches aus Styrol und Arylnitril, das gegebenenfalls bis zu 50 Gew.-% (bezogen auf Gesamtmenge der in Stufe C eingesetzten Monomeren) eines oder mehrerer Comonomerer enthalten kann, in Gegenwart von 5 bis 60 Gew.-Teilen, vorzugsweise 10 bis 50 Gew-Teilen und besonders bevorzugt 20 bis 45 Gew.-Teilen (jeweils bezogen auf Feststoff) des nach Stufe B erhaltenen Kautschuks polymerisiert.

Die bei dieser Pfropfpolymerisation eingesetzten Monomeren sind vorzugsweise Mischungen aus Styrol und Acrylnitril im Gew.-Verhältnis 90:10 bis 50:50, besonders bevorzugt im Gew.-Verhältnis 65:35 bis 75:25, wobei Styrol oder Acrylnitril teilweise durch copolymerisierbare Monomere, vorzugsweise durch α-Methylstyrol, Methylmethacrylat oder N-Phenylmaleinimid ersetzt werden können.

Zusätzlich können bei der Pfropfpolymerisation (C) Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in Stufe C).

Geeignete Molekulargewichtsregler sind beispielsweise n-Dodecylmercaptan, t-Dodecylmercaptan, dimeres α-Methylstyrol.

Als Initiatoren kommen anorganische und organische Peroxide, z.B. $H_2O_2$, Di-tert.-butylperoxid, Cumolhydroperoxid, Dicyclohexylpercarbonat, tert.-Butylhydroperoxid, p-Menthanhydroperoxid, Azoinitiatoren wie z.B. Azobisisobutyronitril, anorganische Persalze wie Ammonium-, Natrium- oder Kaliumpersulfat, Kaliumperphosphat, Natriumperborat sowie Redox-System in Betracht, die sich aus einem in der Regel organischen Oxidationsmittel und einem Reduktionsmittel zusammensetzen, wobei im Reaktionsmedium zusätzlich Schwermetallionen vorhanden sind (siehe H. Logemann in Houben-Weyl, Methoden der Organischen Chemie, Band 14/1, S. 263 bis 297).

Die Reaktionstemperatur ist 25°C bis 160°C, vorzugsweise 40°C bis 90°C. Als Emulgatoren können die oben genannten Verbindungen eingesetzt werden.

Zur Erzeugung der erfindungsgemäßen Pfropfpolymerisate (C) muß die Pfropfpolymerisation durch Monomerenzulauf derart durchgeführt werden, daß innerhalb der ersten Hälfte der Gesamtmonomerzudosierzeit 55 bis 90 Gew.-%, vorzugsweise 60 bis 80 Gew.-% und besonders bevorzugt 65 bis 75 Gew.-% der gesamten bei der Pfropfpolymerisation C einzusetzenden Monomeren zudosiert werden; der verbleibende Monomeranteil wird innerhalb der zweiten Hälfte der Gesamtmonomerzudosierzeit zudosiert.

Schließlich wird das so erzeugte Pfropfpolymerisat mit mindestens einem thermoplastischen Vinylharz gemischt.

Dies ist auf verschiedene Weise möglich. Wurde das Vinylharz selbst durch Emulsionspolymerisation erzeugt, so können die Latices gemischt und gemeinsam ausgefällt und aufgearbeitet werden.
Wurde das Vinylharz durch Lösungs- oder Massepolymerisation hergestellt, so muß das Pfropfpolymerisat durch bekannte Verfahren, beispielsweise durch Sprühtrocknung oder durch Zusatz von Salzen und/oder Säuren, Waschen der Fällprodukte und Trocknung des Pulvers isoliert und danach mit dem Vinylharz vermischt werden (vorzugsweise auf Mehrwalzenstühlen, Mischextrudern oder Innenknetern); diese Methode wird bevorzugt angewandt.

Als Vinylharze werden vorzugsweise Copolymerisate des Styrols und Acrylnitrils im Gewichtsverhältnis 90:10 bis 50:50 eingesetzt, wobei das Styrol ganz oder teilweise durch α-Methylstyrol und/oder Methylmethacrylat ersetzt sein kann; gegebenenfalls kann anteilmäßig bis zu 30 Gew.-%, bezogen auf Vinylharz, eines weiteren Monomeren aus der Reihe Maleinsäureanhydrid, Maleinsäureimid, N-(Cyclo)-Alkylmaleinimid, N-(Alkyl)-Phenylmaleinimid mitverwendet werden.

Einzelheiten zur Herstellung dieser Harze sind beispielsweise in der DE-AS 24 20 358 und der DE-AS 27 24 360 beschrieben. Durch Masse- bzw. Lösungspolymerisation hergestellte Vinylharze haben sich besonders bewährt.

Der Anteil des Pfropfkautschuks in den erfindungsgemäßen Formmassen läßt sich in weiten Grenzen variieren; vorzugsweise beträgt er 10 bis 80 Gew.-%, besonders bevorzugt 20 bis 75 Gew.-%.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

## Beispiele

### Beispiel 1

Herstellung eines Kautschuklatex (Stufe A)

In einen druckfesten 6-1-Reaktor mit Blattrüher (Umdrehung ca. 120/min) werden folgende Komponenten eingefüllt:

| | |
|---|---|
| Entsalztes Wasser | 2.280,00 g |
| Disproportionierte Abietinsäure in Form ihres Natriumsalzes (Dresinate 731) als 10 Gew.-%ige wäßrige Lösung | 372,00 g |
| t-Dodecylmercaptan | 4,50 g |
| Kaliumperoxodisulfat in Form einer 2,5 Gew.-%igen wäßrigen Lösung | 150,00 g |

Nach Evakuierung des Reaktors und Spülen mit Stickstoff werden 1.900,00 g Butadien eingefüllt, wonach auf 65°C aufgeheizt und bis zum Druckabfall auf 4 bar polymerisiert wird (ca. 22 h).

Der resultierende Polybutadienlatex hat einen mittleren Teilchendurchmesser $d_{50}$ von ca. 115 nm (ermittelt durch Ultrazentrifugenmessung) und einen Gelgehalt von 93 Gew.-%.

Herstellung eines Kautschuklatex (Stufe B)

In einen druckfesten 6 l-Reaktor mit Blattrührer (Umdrehung ca. 120/min) werden folgende Komponenten eingefüllt:

| | |
|---|---|
| Entsalztes Wasser | 1 100,00 g |
| Polybutadienlatex aus Stufe A | 175,40 g |

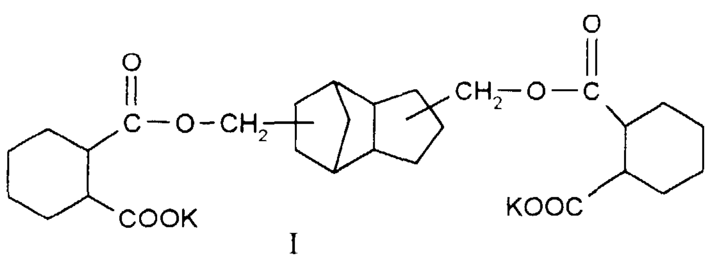 6,00 g

I

Nach Evakuierung des Reaktors und Spülen mit Stickstoff werden eingefüllt:

| | |
|---|---|
| Butadien | 480,00 g |
| t-Dodecylmercaptan/n-Dodecylmercaptan= 1:1-Mischung | 2,16 g |
| Dann wird auf 65°C aufgeheizt, wonach eine Lösung aus Entsalztes Wasser | 48,00 g |
| Kaliumperoxodisulfat | 4,80 g |

zugegeben wird. Danach werden innerhalb von 20 h parallel 1 677,00 g Butadien und 12,02 g eines t-Dodecylmercaptan/n-Dodecylmercaptan = 1:1-Gemisches sowie eine Lösung von 24,00 g I in 726,00 g entsalztem Wasser zudosiert. Nach einer weiteren Reaktionszeit (44 h) bei 65°C wird bei einem Druck von 4 bar entspannt. Es resultiert ein Polybutadienlatex mit einem mittleren Teilchendurchmesser $d_{50}$ von 276 nm und einem Gelgehalt von 49 Gew.-%.

Pfropfpolymerisation auf den Polybutadienlatex (Stufe C)

72,20 Gew.-Teile des nach der Entgasung ca. 48,5 Gew.-%igen Polybutadienlatex aus Stufe B werden in einem Reaktor durch Zugabe von entsalztem Wasser auf einen Feststoffgehalt von ca. 20 Gew.-% gebracht, mit 0,5 Gew.-Teilen $K_2S_2O_8$ (in Form einer 2,5 Gew.-%igen wäßrigen Lösung) versetzt und auf 62°C erhitzt.

Danach werden bei dieser Temperatur 65 Gew.-Teile eines Styrol/Acrylnitril-Gemisches (Gew.-Verhältnis 72: 28) und 0,2 Gew.-Teile t-Dodecylmercaptan sowie parallel dazu 15 Gew.-Teile einer wäßrigen 10%igen Lösung des Natriumsalzes der disproportionierten Abietinsäure (Dresinate 731) innerhalb von 4 h derart zugegeben, daß innerhalb der ersten 2 h 60 Gew.-% der Gesamtmonomermenge zum Reaktionsgemisch zudosiert wurden. Nach einer Nachreaktionszeit von 4 h bei 62°C resultiert ein Pfropfkautschuklatex mit einem Feststoffgehalt von ca. 36 Gew.-%.

Stabilisierung mit einem phenolischen Antioxidans, Koagulation mit einem Magnesiumsulfat/Essigsäure-Gemisch, Waschen mit Wasser und Trocknung im Vakuum bei 70°C liefert ein Pfropfkautschukpulver mit einem Kautschukgehalt von ca. 35 Gew.-%.

Abmischung des Pfropfpolymerisats mit einer Vinylharzkomponente (Stufe D)

62,8 Gew.-Teile des Pfropfkautschukpulvers aus Stufe C werden mit 37,2 Gew.-Teilen eines Styrol/Acrylnitril-Copolymerharzes (Styrol: Acrylnitril-Gew.-Verhältnis = 72:28, $\overline{M}_w$ = 115 000, $\overline{M}_w/\overline{M}_n$ -1 ≤ 2), 0,1 Gew.-Teilen eines Silikonöls und 2 Gew.-Teilen Ethylendiaminbisstearylamid in einem Innenkneter vermischt und anschließend durch Spritzgießen zu Prüfkörpern verarbeitet.

Folgende Daten wurden ermittelt:
Kerbschlagzähigkeit bei Raumtemperatur ($a_k^{RT}$) und bei -40°C ($a_k^{-40°C}$) nach ISO 180/1A (Einheit: kJ/m$^2$), Kugeldruckhärte $H_c$ nach DIN 53 456 (Einheit: N/mm$^2$), Wärmeformbeständigkeit (Vicat B) nach DIN 53 460 (Einheit: °C), Fließverhalten MVI nach DIN 53 735 U (Einheit: cm$^3$/10 min) und Glanzverhalten nach DIN 67 530 bei einem Reflektionswinkel von 60° (Reflektometerwert).

Die Ergebnisse sind in Tabelle 1 zusammengestellt.

**Beispiel 2**

Beispiel 1 wird wiederholt, wobei in Stufe B 158,30 g des Polybutadienlatex aus Stufe A und insgesamt 16,18 g eines t-Dodecylmercaptan/n-Dodecylmercaptan = 1:1-Gemisches eingesetzt werden. Es resultiert nach Stufe B ein Polybutadienlatex mit einem mittleren Teilchendurchmesser $d_{50}$ von 298 nm und einem Gelgehalt von 42 Gew.-%.

Stufe C wird wie in Beispiel 1 beschrieben durchgeführt, wobei 83,20 Gew.-Teile 48,1 Gew.-%iger Polybutadienlatex (≙ 40 Gew.-Teile Polybutadien) und 60 Gew.-Teile der beschriebenen Monomeren/Regler-Mischung eingesetzt werden. Stufe D wird wie in Beispiel 1 beschrieben durchgeführt, wobei 55 Gew.-Teile des resultierenden Pfropfkautschukpulvers mit 45 Gew.-Teilen Styrol/Acrylnitril-Copolymerharz abgemischt werden.

**Beispiel 3**

Beispiel 2 wird wiederholt, wobei unter Beibehaltung der Stufen A und B in Stufe C die Zudosierung des Monomeren/Regler-Gemisches so erfolgt, daß innerhalb der ersten 2 h 80 Gew.-% der Gesamtmonomermenge zum Reaktionsgemisch zudosiert werden. Stufe D erfolgt wie in Beispiel 2 beschrieben.

**Beispiel 4 (Vergleich)**

Beispiel 2 wird wiederholt, wobei in Stufe B als Saatlatex 332,76 g des Polybutadienlatex aus Beispiel 1/Stufe A eingesetzt werden. Es resultiert ein Polybutadienlatex mit einem mittleren Teilchendurchmesser $d_{50}$ von 205 nm und einem Gelgehalt von 65 Gew-%, der wie in Beispiel 2 beschrieben in einer Pfropfpolymerisation eingesetzt und als Pfropfkautschukpulver in analoger Abmischung mit Styrol/Acrylnitril-Copolymerharz ausgeprüft wird.

**Beispiel 5 (Vergleich)**

Beispiel 2 wird wiederholt, wobei in Stufe B als Saatlatex 155,40 g eines 40 Gew.-%igen Polybutadienlatex mit einem mittleren Teilchendurchmesser $d_{50}$= 112 nm und einem Gelgehalt von 41 Gew.-% eingesetzt wird.

Es resultiert ein Polybutadienlatex mit einem mittleren Teilchendurchmesser $d_{50}$ von 281 nm und einem Gelgehalt von 46 Gew.-%, der wie in Beispiel 2 beschrieben den Stufen C und D unterworfen wird.

**Beispiel 6 (Vergleich)**

Beispiel 2 wird wiederholt, wobei in Stufe als Saatlatex 100,20 g des Polybutadienlatex aus Beispiel 1/Stufe A eingesetzt werden.

Es resultiert ein Polybutadienlatex mit einem mittleren Teilchendurchmesser $d_{50}$ von 338 nm und einem Gelgehalt von 60 Gew.-%, der wie in Beispiel 2 beschrieben den Stufen C und D unterworfen wird.

**Beispiel 7 (Vergleich)**

Beispiel 2 wird wiederholt, wobei in Stufe B insgesamt 9,7 g eines t-Dodecylmercaptan/n-Dodecylmercaptan= 1:1-Gemisches eingesetzt werden und die Polymerisationsreaktion nach einem Druckabfall auf 3 bar beendet wird.

Es resultiert ein Polybutadienlatex mit einem mittleren Teilchendurchmesser $d_{50}$ von 281 nm und einem Gelgehalt von 78 Gew.-%, der wie in Beispiel 2 beschrieben den Stufen C und D unterworfen wird.

**Beispiel 8 (Vergleich)**

Beispiel 2 wird wiederholt, wobei in Stufe C die Zudosierung des Styrol/Acrylnitril/Regler-Gemisches so erfolgt, daß innerhalb der ersten 2 h 50 Gew-% der Gesamtmenge zum Reaktionsgemisch zudosiert werden und innerhalb der letzten 2 h die restlichen 50 Gew.-% zudosiert werden. Das resultierende Pfropfkautschukpulver wird wie in Beispiel 2 beschrieben der Stufe D unterworfen.

**Beispiel 9 (Vergleich)**

Beispiel 2 wird wiederholt, wobei in Stufe C die Zudosierung des Styrol/Acrylnitril/Regler-Gemisches so erfolgt, daß innerhalb der ersten 2 h 30 Gew.-% der Gesamtmenge zum Reaktionsgemisch zudosiert werden und innerhalb der letzten 2 h die restlichen 70 Gew.-% zudosiert werden. Das resultierende Pfropfkautschukpulver wird wie in Beispiel 2 beschrieben der Stufe D unterworfen.

Aus den in Tabelle 1 zusammengestellten Prüfwerten ist ersichtlich, daß nur die erfindungsgemäß hergestellten Formmassen eine Kombination aus sehr hoher Zähigkeit und sehr hohem Glanz aufweisen. Dabei ist wichtig, daß die Werte für die sonstigen technologisch wichtigen ABS-Eigenschaften wie Härte, Wärmeformbeständigkeit und insbesondere thermoplastische Fließfähigkeit als Maß für die Verarbeitbarkeit nicht negativ beeinflußt werden.

Tabelle 1:

| Prüfdaten der untersuchten Formmassen. | | | | | | |
|---|---|---|---|---|---|---|
| Beispiel | $a_k^{RT}$ [kJ/m$^2$] | $a_k^{-40°C}$ [kJ/m$^2$] | Hc [N/mm$^2$] | Vicat B [°C] | MVI [cm$^3$/10min] | Glanzgrad |
| 1 | 45 | 29 | 79 | 97 | 4,2 | 89 |
| 2 | 42 | 26 | 78 | 95 | 7,9 | 91 |
| 3 | 44 | 27 | 78 | 94 | 6,8 | 91 |
| 4 (Vergleich) | 10 | 3 | 70 | 92 | 12,8 | 90 |
| 5 (Vergleich) | 38 | 24 | 77 | 98 | 5,6 | 88 |
| 6 (Vergleich) | 35 | 22 | 80 | 98 | 5,7 | 74 |
| 7 (Vergleich) | 25 | 19 | 89 | 96 | 8,4 | 87 |
| 8 (Vergleich) | 34 | 23 | 76 | 96 | 7,5 | 87 |
| 9 (Vergleich) | 29 | 17 | 77 | 97 | 8,8 | 85 |

**Patentansprüche**

1. ThermoplastischeFormmassen vom ABS-Typ, erhältlich durch

   A) Herstellung eines Kautschuklatex mit einem mittleren Teilchendurchmesser $d_{50}$ von 30 bis 160 nm und einem Gelgehalt von 75 bis 100 Gew.-% durch Emulsionspolymerisation von Butadien und gegebenenfalls bis zu 50 Gew.-% (bezogen auf Gesamtmonomermenge in Stufe A) eines Comonomeren,

B) Emulsions-Polymerisation einer solchen Menge Butadien und gegebenenfalls bis zu 50 Gew.-% (bezogen auf Gesamtmonomermenge in Stufe B) eines Comonomeren in Gegenwart des nach Stufe A erhaltenen Katuschuklatex, daß ein Kautschuklatex (B) mit einem mittleren Teilchendurchmesser $d_{50}$ = 220 bis 330 nm und einem Gelgehalt von 25 bis 70 Gew.-% entsteht,

C) Emulsions-Polymerisation von 40 bis 95 Gew.-Teilen eines Gemisches aus Styrol und Acrylnitril, das gegebenenfalls bis zu 50 Gew.-% (bezogen auf Gesamtmenge der in Stufe C eingesetzten Monomeren) eines oder mehrere Comonomerer enthält in Gegenwart von 5 bis 60 Gew.-Teilen (bezogen auf Feststoff) des nach Stufe B vorliegenden Kautschuks nach einem Zulaufverfahren in der Weise, daß innerhalb der ersten Hälfte der Gesamtmonomerzudosierzeit in Stufe C zwischen 55 und 90 Gew.-% der gesamten in Stufe C zur Reaktion kommenden Monomeren zudosiert werden und

D) Mischen des nach Stufe C erhaltenen Polymerisats mit mindestens einem thermoplastischen Vinylharz.

**2.** Thermoplastische Formmassen vom ABS-Typ gemäß Anspruch 1, worin

A) der Kautschuklatex Teilchen eines mittleren Teilchendurchmessers $d_{50}$ von 50 bis 150 nm und einen Gelgehalt von 80 bis 95 Gew.-% besitzt,

B) das Emulsions-Polymerisat (B) einen mittleren Teilchendurchmesser $d_{50}$ = 230 bis 320 nm und einen Gelgehalt von 30 bis 65 Gew.-%, aufweist,

C) das Emulsionspolymerisat (C) aus 50 bis 90 Gew.-Teilen eines Gemisches aus Styrol und Acrylnitril, das gegebenenfalls bis zu 50 Gew.-% (bezogen auf Gesamtmenge der in Stufe C eingesetzten Monomeren) eines oder mehrerer Comonomerer enthält in Gegenwart von 10 bis 50 Gew.-Teilen (bezogen auf Feststoff) des Kautschuks so erhalten wurde, daß innerhalb der ersten Hälfte der Gesamtmonomerzudosierzeit in Stufe C zwischen 60 und 80 Gew.-% der gesamten in Stufe C zur Reaktion kommenden Monomeren zudosiert werden.

**3.** Verwendung der thermoplastischen Formmassen gemäß Ansprüchen 1 und 2 zur Herstellung von Formteilen.

**4.** Thermoplastische Formmassen gemäß Anspruch 1, wobei das nach Stufe C erhaltene Polymerisat nach vorheriger Überführung in Pulverform mit mindestens einem thermoplastischen Vinylharz gemischt wird.

## Claims

**1.** ABS-type thermoplastic moulding compositions, obtainable by

A) producing a rubber latex with an average particle diameter $d_{50}$ of 30 to 160 nm and a gel content of 75 to 100 wt.% by emulsion polymerisation of butadiene and optionally up to 50 wt.% (related to the total amount of monomer in stage A) of a comonomer,

B) emulsion polymerisation of an amount of butadiene and optionally up to 50 wt.% (related to the total amount of monomer in stage B) of a comonomer in the presence of the rubber latex obtained according to stage A such that a rubber latex (B) with an average particle diameter $d_{50}$ = 220 to 330 nm and a gel content of 25 to 70 wt.% is produced,

C) emulsion polymerisation of 40 to 95 parts by weight of a mixture of styrene and acrylonitrile, which optionally contains up to 50 wt.% (related to the total amount of monomers used in stage C) of one or more comonomer (s) in the presence of 5 to 60 parts by weight (related to solids) of the rubber present according to stage B by an introduction method such that between 55 and 90 wt.% of all the monomers reacting in stage C are added within the first half of the total monomer addition time in stage C, and

D) mixing the polymer obtained according to stage C with at least one thermoplastic vinyl resin.

**2.** ABS-type thermoplastic moulding compositions according to claim 1, in which

A) the rubber latex particles have an average particle diameter $d_{50}$ of 50 to 150 nm and a gel content of 80 to

95 wt.%,

B) the emulsion polymer (B) has an average particle diameter $d_{50}$ = 230 to 320 nm and a gel content of 30 to 65 wt.%,

C) the emulsion polymer (C) consisting of 50 to 90 parts by weight of a mixture of styrene and acrylonitrile, which optionally contains up to 50 wt.% (related to the total amount of monomers used in stage C) of one or more comonomer(s), in the presence of 10 to 50 parts by weight (related to solids) of the rubber, was obtained such that between 60 and 80 wt.% of all the monomers reacting in stage C are added within the first half of the total monomer addition time in stage C.

**3.** Use of the thermoplastic moulding compositions according to claims 1 and 2 to produce moulded items.

**4.** Thermoplastic moulding compositions according to claim 1, wherein the polymer obtained according to stage C is mixed with at least one thermoplastic vinyl resin after converting it into powder form.

**Revendications**

**1.** Matières à mouler thermoplastiques de type ABS que l'on obtient par

A) préparation d'un latex de caoutchouc possédant un diamètre moyen de particule $d_{50}$ de 30 à 160 nm et une teneur en gel de 75 à 100% en poids, par polymérisation en émulsion de butadiène et le cas échéant, jusqu'à concurrence de 50% en poids (rapportés à la quantité totale des monomères à l'étape A), d'un comonomère,

B) polymérisation en émulsion d'une quantité de butadiène et le cas échéant, jusqu'à concurrence de 50% en poids (rapportés à la quantité totale des monomères à l'étape B), d'un comonomère, en présence du latex de caoutchouc obtenu conformément à l'étape A, telle que l'on obtient un latex de caoutchouc (B) possédant un diamètre moyen de particule $d_{50}$ de 220 à 330 nm et une teneur en gel de 25 à 70% en poids,

C) polymérisation en émulsion de 40 à 95 parties en poids d'un mélange de styrène et d'acrylonitrile qui contient le cas échéant, jusqu'à concurrence de 50% en poids (rapportés à la quantité totale des monomères mis en oeuvre à l'étape C), un ou plusieurs comonomères, en présence de 5 à 60 parties en poids (rapportées à la teneur en substances solides) du caoutchouc présent à l'étape B conformément à un procédé d'addition de telle sorte que, pendant le laps de temps correspondant à la première moitié du temps total d'addition dosée des monomères à l'étape C, on ajoute de manière dosée entre 55 et 90% en poids de la quantité totale des monomères qui doivent être mis à réagir à l'étape C, et

D) mélange du polymère obtenu conformément à l'étape C avec au moins une résine vinylique thermoplastique.

**2.** Matières à mouler thermoplastiques de type ABS selon la revendication 1, dans lesquelles

A) le latex de caoutchouc contient des particules possédant un diamètre moyen de particule $d_{50}$ de 50 à 150 nm et une teneur en gel de 80 à 95% en poids,

B) le polymère d'émulsion (B) présente un diamètre moyen de particule $d_{50}$ de 230 à 320 nm et une teneur en gel de 30 à 65% en poids,

C) le polymère d'émulsion (C) constitué par un mélange de styrène et d'acrylonitrile à concurrence de 50 à 90 parties en poids, qui contient le cas échéant, jusqu'à concurrence de 50% en poids (rapportés à la quantité totale des monomères mis en oeuvre à l'étape C), un ou plusieurs comonomères, est obtenu en présence de 10 à 50 parties en poids (rapportées à la teneur en substances solides) du caoutchouc de telle sorte que, pendant le laps de temps correspondant à la première moitié du temps total d'addition dosée des monomères à l'étape C, on ajoute de manière dosée entre 60 et 80% en poids de la quantité totale des monomères qui doivent être mis à réagir à l'étape C.

3. Utilisation des matières à mouler thermoplastiques selon les revendications 1 et 2 pour la fabrication d'éléments moulés.

4. Matières à mouler thermoplastiques selon la revendication 1, dans lesquelles le polymère obtenu conformément à l'étape C est mélangé, après transformation préalable en une forme pulvérulente, avec au moins une résine vinylique thermoplastique.